# EUROPEAN PATENT APPLICATION

(11) **EP 4 778 755 A2**
(43) Date of publication of application: **22.07.2026**
(21) Application number: 25217060.0
(22) Date of filing: 19.11.2025
(51) Int. Cl.: B60K 11/02, F01P 11/02, B62J 6/02

(54) **A VEHICLE WITH HEADLAMP HOUSING AND RESERVOIR TANK**

(30) Priority: 25.12.2024 IN 202441102942
(71) Applicant: TVS Motor Company Limited, 600006 Chennai (IN)
(72) Inventor: Arumugam, Sivakumar, 600006 Chennai (IN); Matamanan, Anandakrishnan, 600006 Chennai (IN); Prem, Anand, 600006 Chennai (IN); Ramakrishna, Velpula, 600006 Chennai (IN)
(74) Representative: Patentanwaltskanzlei Matschnig & Forsthuber OG

(57) **Abstract**

The present subject matter relates to a vehicle (100). The vehicle (100) comprises a frame structure (400), a headlamp housing (700), side covers (702, 704), and a reservoir tank (200). The headlamp housing (700) is disposed at a front end of the frame structure (400). The side covers (702, 704) extending rearward on either side of the frame structure (400) from the front end (410) of the frame structure (400). The reservoir tank (200) is coupled to the frame structure (400), such that the reservoir tank (200) is disposed behind the headlamp housing (700), and between the frame structure (400) and the side covers (702, 704) of the vehicle (100).

## Description

### FIELD OF THE INVENTION

The present subject matter is related, in general to a vehicle, and more particularly, but not exclusively to a reservoir tank in a vehicle.

### BACKGROUND OF THE INVENTION

A reservoir tank in a vehicle such as for coolant plays a critical role in maintaining the efficiency and functionality of the cooling system of the vehicle. The coolant reservoir tank maintains optimal engine temperature, ensuring that the radiator has sufficient coolant for effective heat dissipation, preventing overheating of the engine. Additionally, during engine operation, the coolant heats up, expands, and may exceed the radiator's capacity, whereby the coolant reservoir provides a space to collect the excess coolant. As the engine cools, the coolant contracts, creating a vacuum that draws the coolant back from the coolant reservoir into the radiator. Therefore, the coolant reservoir provides a space to collect the excess coolant.

Coolant reservoirs provide coolant level indicators that allow a vehicle user to check and monitor coolant level in the reservoir without opening the radiator cap. Vehicle users can check and refill the coolant in the coolant reservoir without dealing with pressurized radiator caps, reducing the risk of burns or spills.

An existing problem with coolant reservoirs is their location on the vehicle making them inaccessible to vehicle users and vulnerable to heat damage. Locations in close proximity to the engine or exhaust may expose the coolant reservoir tank to excessive heat, leading to quicker wear, leakage, or even warping of the tank.

Additionally, restricted accessibility of coolant reservoirs make it difficult for vehicle users to check coolant levels or refill them without disassembling parts of the vehicle. Poor positioning of the coolant reservoir can lead to parallax error making it difficult for the vehicle user to determine the coolant level at a glance. Furthermore, coolant reservoir tanks located deep in the vehicle frame may make it difficult to completely drain or clean them during maintenance.

Conventionally, coolant reservoirs are normally located under the side panels of the vehicle in close proximity with the engine in order to minimize the length of connecting hoses. However, in such a configuration, the coolant reservoirs are exposed to excessive heat from the engine, and additionally accessing the coolant reservoir tank may require removing body panels, making level checks and refilling inconvenient. In some other setups, coolant reservoirs are located beneath or behind the radiator to optimize space and achieve compactness. However, this results in restricted accessibility and also limited airflow causing heat accumulation in the coolant reservoir tank.

Some other designs incorporate the coolant reservoirs in the tail section (rear side) of the vehicle in order to distribute weight evenly and free up space near the engine. However these setups require longer connecting hoses, which can complicate maintenance and increase the risk of leaks or blockages. In general, the location of the coolant reservoir tank reflects a compromise between performance, aesthetics, and practicality.

Accordingly, a need or requirement still exists for a reservoir tank in a vehicle that provides increased accessibility, customer comfort, convenience, performance, reliability, and serviceability. There is a need for a reservoir tank in a vehicle that is easily accessible, serviceable, and allows a vehicle user to conveniently and reliably determine the coolant level.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In accordance with an embodiment illustrated herein, the present subject matter relates to a vehicle. The vehicle comprises a frame structure, a headlamp housing, side covers, and a reservoir tank. The headlamp housing is disposed at a front end of the frame structure. The side covers extend rearward on either side of the frame structure from the front end of the frame structure. The reservoir tank is coupled to the frame structure, wherein the reservoir tank is disposed behind the headlamp housing and between the frame structure and the side covers of the vehicle.

Another aspect of the present subject matter pertains to the frame structure comprising a head pipe disposed at a front end of the frame structure, a left frame member, and a right frame member, wherein each of the left frame member and the right frame member extending rearward from the head pipe, wherein the side covers being configured to enclose the frame members, and wherein the reservoir tank being mounted on at least one of the frame members.

Yet another aspect of the present subject matter pertains to the side covers comprising one or more openings. The one or more openings are configured for mounting at least one turn signal lamp and the reservoir tank, wherein a first opening of the one or more openings for the reservoir tank is positioned rearward of a second opening of the one or more openings for the at least one turn signal lamp.

Yet another aspect of the present subject matter pertains to the vehicle further comprising a fuel storage unit and a handlebar assembly. The reservoir tank is positioned adjacent to the fuel storage unit and below the handlebar assembly.

Yet another aspect of the present subject matter pertains to the reservoir tank being disposed above a radiator and a power unit of the vehicle.

Yet another aspect of the present subject matter pertains to the reservoir tank being disposed above at least one control unit and rearward of at least one front suspension of the vehicle.

Yet another aspect of the present subject matter pertains to the reservoir tank being visible to a rider within their peripheral vision while riding the vehicle.

Yet another aspect of the present subject matter pertains to the reservoir tank comprising an inlet vent, an outlet vent, one or more markings, and one or more mounting brackets. The one or more markings are configured to indicate a fluid level of the reservoir tank. The one or more mounting brackets are configured to mount the reservoir tank on at least one of the frame member and the side covers.

Yet another aspect of the present subject matter pertains to the one or more mounting brackets being configured to allow vertical and horizontal adjustment of the reservoir tank relative to the frame structure.

Yet another aspect of the present subject matter pertains to the one or more markings include electronic level sensors configured to transmit fluid level data to a display unit of the vehicle.

Yet another aspect of the present subject matter pertains to the reservoir tank which comprises one or more different fluid.

### BRIEF DESCRIPTION OF THE DRAWINGS

The present invention will become more fully understood from the detailed description given herein below and the accompanying drawings which are given by way of illustration only, and thus are not limitative of the present invention.
**Figure 1** illustrates a side view of an exemplary embodiment of a reservoir tank, in accordance with an embodiment of the invention.
**Figure 2** illustrates an isometric view of an exemplary embodiment of a reservoir tank, in accordance with an embodiment of the invention.
**Figure 3** illustrates an isometric view of an exemplary embodiment of a reservoir tank and a radiator, in accordance with an embodiment of the invention.
**Figure 4** illustrates an exploded view of an exemplary embodiment of a frame structure of a two-wheeled vehicle incorporating the present subject matter, in accordance with one embodiment of the invention.
**Figure 5** illustrates a plan view of an exemplary embodiment of a two-wheeled vehicle incorporating the present subject matter, in accordance with one embodiment of the invention.
**Figure 6** illustrates a plan view of an exemplary embodiment of a handlebar assembly of a two-wheeled vehicle incorporating the present subject matter, in accordance with one embodiment of the invention.
**Figure 7** illustrates an isometric view of an exemplary embodiment of a headlamp housing and side covers of a two-wheeled vehicle incorporating the present subject matter, in accordance with one embodiment of the invention.
**Figure 8** illustrates an isometric view of an exemplary embodiment of a frame structure of a two-wheeled vehicle incorporating the present subject matter, in accordance with one embodiment of the invention.

### DETAILED DESCRIPTION OF THE DRAWINGS

The present disclosure may be best understood with reference to the detailed figures and description set forth herein. Various embodiments are discussed below with reference to the figures. However, those skilled in the art will readily appreciate that the detailed descriptions given herein with respect to the figures are simply for explanatory purposes as the system may extend beyond the described embodiments. For example, the teachings presented, and the needs of a particular application may yield multiple alternative and suitable approaches to implement the functionality of any detail described herein. Therefore, any approach may extend beyond the particular implementation choices in the following embodiments described and shown.

References to "one embodiment," "at least one embodiment," "an embodiment," "one example," "an example," "for example," and so on indicate that the embodiment(s) or example(s) may include a particular feature, structure, characteristic, property, element, or limitation but that not every embodiment or example necessarily includes that particular feature, structure, characteristic, property, element, or limitation. Further, repeated use of the phrase "in an embodiment" does not necessarily refer to the same embodiment.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

The present invention is illustrated with a vehicle which may be an Internal Combustion Engine (ICE) based vehicle or a Hybrid Electric Vehicle (HEV). In a preferred embodiment, the vehicle may be an ICE-based motorcycle. A prerequisite of the vehicle in accordance with the present subject matter relates to the disposition of a reservoir tank on either a left side or a right side of a frame structure of the vehicle. The frame structure may include a backbone frame, a cradle frame, a perimeter frame, a trellis frame, a monocoque frame, double beam frame, a delta box frame, and any other frame structure for a motorcycle.

The vehicle user is the primary operator/pilot of the vehicle but may also, depending on the context, include the secondary operator/passenger (if any) of the vehicle. The term vehicle user has been used interchangeably with vehicle rider, vehicle operator, vehicle controller, and vehicle driver, while conveying the same meaning.

The object of the present subject matter is to provide a reservoir tank in a vehicle that is easily accessible to a vehicle user.

In accordance with the present disclosure, the present subject matter relates to a vehicle. The vehicle comprises a frame structure, a headlamp housing, side covers, and a reservoir tank. The headlamp housing is disposed at a front end of the frame structure. The side covers extend rearward on either side of the frame structure from the front end of the frame structure. The reservoir tank is coupled to the frame structure, wherein the reservoir tank is disposed behind the headlamp housing and between the frame structure and the side covers of the vehicle.

It is another object of the present subject matter to provide a reservoir tank in a vehicle that has enhanced durability and performance. In view of addressing the same, the present subject matter, in an embodiment, provides the frame structure comprising a head pipe disposed at a front end of the frame structure, a left frame member, and a right frame member, wherein each of the left frame member and the right frame member extending rearward from the head pipe, wherein the side covers being configured to enclose the frame members, and wherein the reservoir tank being mounted on at least one of the frame members.

It is another object of the present subject matter to provide a reservoir tank in a vehicle that is disposed at a location that allows a vehicle user to conveniently and reliably determine the coolant level. In view of addressing the same, the present subject matter, in an embodiment, provides the side covers comprising one or more openings. The one or more openings are configured for mounting at least one turn signal lamp and the reservoir tank, wherein a first opening of the one or more openings for the reservoir tank is positioned rearward of a second opening of the one or more openings for the at least one turn signal lamp.

It is another object of the present subject matter to provide a reservoir tank in a vehicle that has increased serviceability. In view of addressing the same, the present subject matter, in an embodiment, provides the vehicle further comprising a fuel storage unit and a handlebar assembly. The reservoir tank is positioned adjacent to the fuel storage unit and below the handlebar assembly. In an embodiment, the reservoir tank is disposed above a radiator and a power unit of the vehicle. In another embodiment, the reservoir tank is disposed above at least one control unit and rearward of at least one front suspension of the vehicle.

It is another object of the present subject matter to provide a coolant reservoir in a vehicle that is disposed at a location that allows a vehicle user to conveniently and reliably determine the coolant level. In view of addressing the same, the present subject matter, in an embodiment, provides the reservoir tank comprising an inlet vent, an outlet vent, one or more markings, and one or more mounting brackets. The one or more markings are configured to indicate a fluid level of the reservoir tank. The one or more mounting brackets are configured to mount the reservoir tank on at least one of the frame member and the side covers. Additionally, in an embodiment, the one or more mounting brackets, may be configured to allow vertical and horizontal adjustment of the reservoir tank relative to the frame structure.

In an embodiment, the reservoir tank may be visible to a rider within their peripheral vision while riding the vehicle. In another embodiment, the one or more markings may include electronic level sensors configured to transmit fluid level data to a display unit of the vehicle.

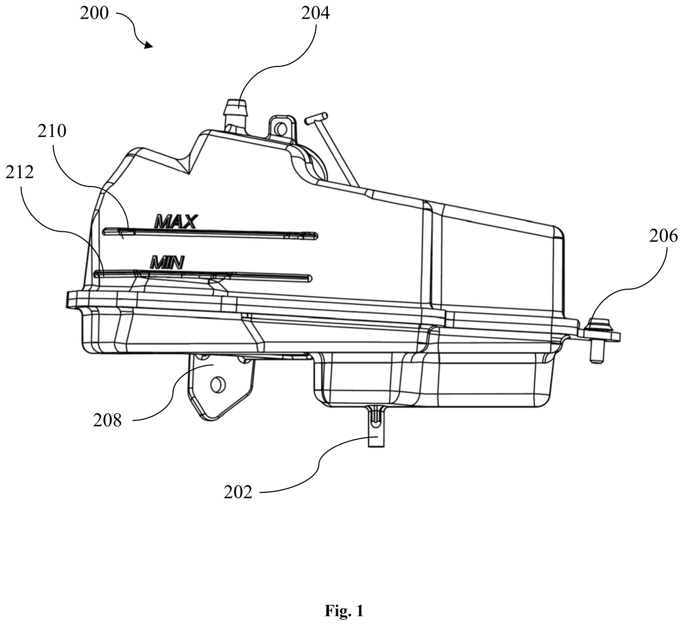

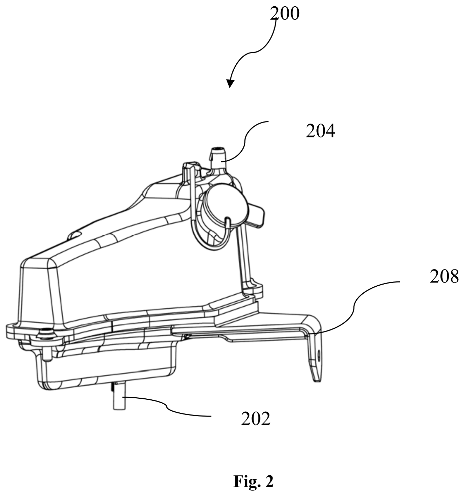

**Figure 1** illustrates a side view of an exemplary embodiment of a reservoir tank 200, and Figure 2 illustrate an isometric view of the reservoir tank 200 in accordance with an embodiment of the invention. Figures 1 and 2 are taken together for describing the present subject matter.

With reference to Figure 1, 200 denotes a reservoir tank, 202 denotes an inlet vent, 204 denotes an outlet vent, 206 and 208 denote one or more mounting brackets, 210 and 212 denote one or more markings. In an embodiment of the present disclosure, the reservoir tank 202 is configured to comprise one or more different fluids for the vehicle. The one or more fluids are separated by at least one wall.

The reservoir tank 200 comprises an inlet vent 202, an outlet vent 204, one or more mounting brackets 206, 208, and one or more markings 210, 212.

The reservoir tank 200 is a device for storing a fluid. In a preferred embodiment, the fluid may be a coolant for the vehicle. In an embodiment, the reservoir tank 200 may have a capacity ranging from 100 millilitres to 2000 millilitres.

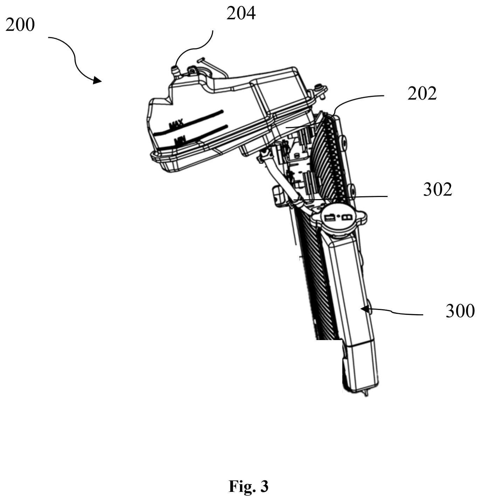

In an embodiment of the present disclosure, the inlet vent 202 of the reservoir tank 200 is connected to a unit of the vehicle such as radiator 300 (See Figure 3a, 3b) by means of a connecting hose 302. In this during engine operation, the coolant heats up, expands, and may exceed the radiator's capacity, whereby the reservoir tank 200 provides a space to collect the excess coolant. As the engine cools, the coolant contracts, creating a vacuum that draws the coolant back from the reservoir tank 200 into the radiator 300. In a preferred embodiment, the inlet vent 202 is disposed on a bottom surface of the reservoir tank 200.

The outlet vent 204 of the reservoir tank 200 is provided to release built up gas in order to regulate pressure inside the reservoir tank 200. The outlet vent 204 ensures that the cooling system of the vehicle operates efficiently by managing coolant flow and maintaining consistent pressure. In a preferred embodiment, the outlet vent 204 is disposed on a top surface of the reservoir tank 200.

The one or more markings 210, 212 are configured to indicate a fluid level of the reservoir tank 200. The one or more markings 210, 212 are regions that allow visibility into the reservoir tank 200, allowing the vehicle user to determine the fluid level in the reservoir tank 200. The one or more markings 210, 212 may include viewing windows, viewing slots or panels, that are made of glass, plastic, tempered glass, or polycarbonate. In an embodiment, the one or more markings 210, 212 may include transparent or translucent regions that allow the vehicle suer to determine the coolant level in the reservoir tank 100.

The one or more markings 210, 212 allow the vehicle user to conveniently and reliably determine the coolant level in the reservoir tank 200. In an embodiment, the one or more markings 210, 212 may be disposed on a lateral surface of the reservoir tank 200 facing away from the frame structure 400 of the vehicle 100.

In an embodiment, the one or more markings 210, 212 may be a rectangular window/panel with a width ranging from 1 millimetre to 20 millimetres and a length ranging from 1 millimetre to 100 millimetres. In another embodiment, the one or more markings 210, 212 may comprise two separate rectangular windows/panels placed at two different vertical heights corresponding to a maximum coolant level and a minimum coolant level respectively.

The one or more markings 210, 212 allow the vehicle user to check when the coolant level is at a maximum level to prevent overfilling and overflowing of the coolant in the reservoir tank 200. Additionally, the one or more markings 210, 212 also allow the vehicle user to check when the coolant level is at a minimum level and alert the vehicle user to replenish the coolant. Therefore, this ensures that the reservoir tank 200 is optimally filled at all times ensuring that the radiator 300 has sufficient coolant for effective heat dissipation, preventing overheating of the engine. In an exemplary embodiment of the present disclosure, as shown in figure 1 and 2a , 212 marking of the one or more markings 210, 212 represents minimum level of at least one fluid inside the reservoir tank 200. Further, 210 marking of the one or more markings 210, 212 represents maximum level of at least one fluid inside the reservoir tank 200.

In an embodiment, the one or more markings 210, 212 may include electronic level sensors configured to transmit fluid level data to a display unit of the vehicle 100. The electronic level sensors may include ultrasonic level sensors, capacitive level sensors, radar level sensors, float-based sensors with magnetic or reed switch, conductive (resistance) sensors, pressure transducers (hydrostatic level sensors), optical level sensors, and laser level sensors. The sensors may be configured to determine the fluid level being at a minimum or a maximum level in the reservoir tank 200 and alert the vehicle user by transmitting the fluid level data to a display unit of the vehicle 100. This will properly notify the vehicle user of the fluid level in the reservoir tank 200.

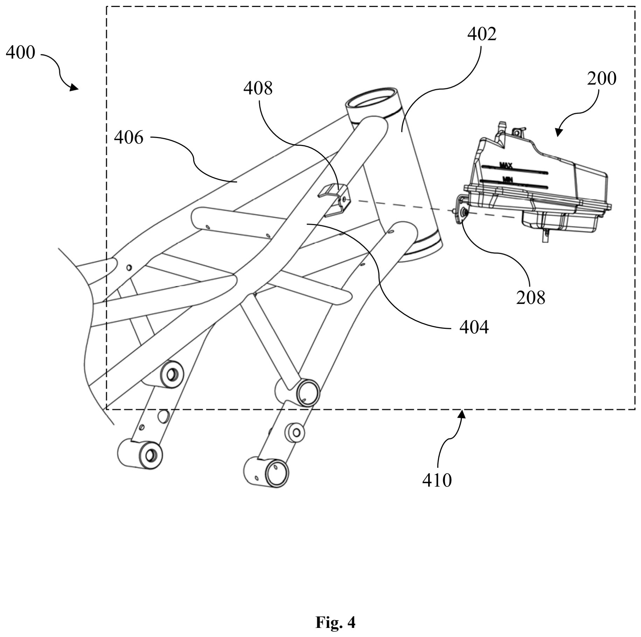

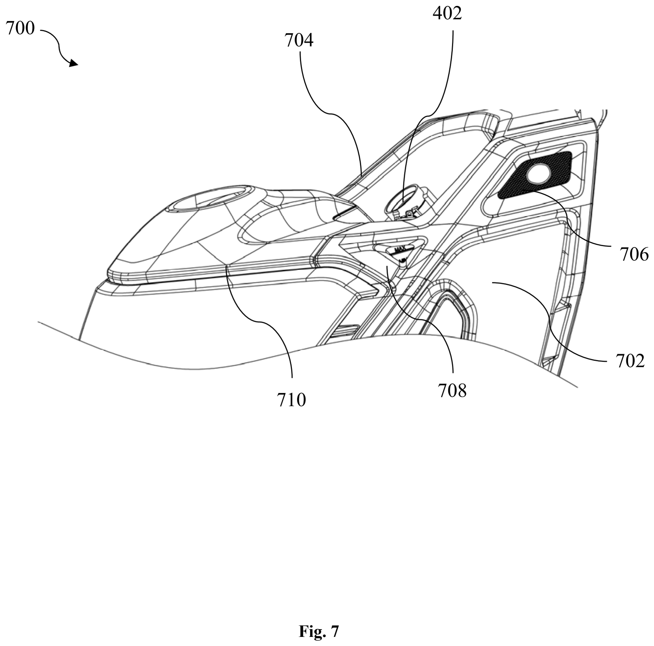

The one or more mounting brackets 206, 208 of the reservoir tank 200 are configured to mount the reservoir tank 200 on at least one of the frame members 404, 406 (See Figure 4) and the side covers 702, 704 (See Figure 7). The one or more mounting brackets 206, 208 may include studs, brackets, flanges, hooks, tabs, round or oval studs, L- or T- shaped brackets, and any other mounting structure made of plastic or metal. In an exemplary embodiment of the present disclosure, mounting bracket 206 one or more mounting brackets 206, 208 is configured to couple the reservoir tank 200 with the side covers 702, 704. Further, mounting bracket 208 one or more mounting brackets 206, 208 is configured to couple the reservoir tank 200 with at least one of the frame members 404, 406.

The one or more mounting brackets 206, 208 comprise a first mounting bracket 206 and a second mounting bracket 208. In an embodiment, the first mounting bracket 206 may be configured to extend in a vehicle longitudinal direction, along a horizontal plane that is parallel to the ground. The first mounting bracket 206 is configured to engage with a corresponding receiving member (not shown) on a rear portion of the side covers 702, 704.

In an embodiment, the second mounting bracket 208 may be configured to extend in a vehicle-width direction towards the frame structure 400 of the vehicle in an L-shape, firstly along a horizontal plane that is parallel to the ground, and then bending along a vertical plane that is perpendicular to the ground. The one or more mounting brackets 208 is configured to engage with a receiving member 408 (See Figure 4) on the frame structure 400.

The reservoir tank 200 may be mounted to at least one of the frame members 404, 406 and the side covers 702, 704 by means of any of: bolted connections, welded connections, riveted connections, screwed or threaded connections, adhesive bonding, clamping, snap-fit or interlocking mechanisms, magnetic mounting, straps, bands, cotter pins, and sliding/slot-mounted systems.

In an embodiment, the one or more mounting brackets 206, 208 may be configured to allow vertical and horizontal adjustment of the reservoir tank 200 relative to the frame structure 400. Therefore, this allows greater flexibility in positioning the reservoir tank, enhancing the serviceability of the reservoir tank 200 and allowing the vehicle user to conveniently check the fluid level in the reservoir tank 200.

In an embodiment, the reservoir tank 200 may have more than one storage reservoirs to store the fluid separated by partition walls. The more than one storage reservoirs may store different fluids and be configured with separate individual inlet vents, outlet vents, and connecting hoses.

In an embodiment, the inlet vent 202 is disposed on a bottom surface of the reservoir tank 200 and the outlet vent 204 is disposed on a top surface of the reservoir tank 200.

**Figure 3** illustrates an isometric view of an exemplary embodiment of the reservoir tank 200 and a radiator 300, in accordance with an embodiment of the invention.

With reference to Figure 3a, 300 denotes a radiator, 302 denotes a connecting hose, 200 denotes a reservoir tank, 202 denotes an inlet vent, and 204 denotes an outlet vent.

The radiator 300 is a key component of the cooling system of the vehicle 100 that helps regulate the engine's temperature. The heated coolant is pumped into the radiator 300, which consists of a series of thin metal fins and tubes. Air passes over the radiator's fins transferring heat from the coolant to the air, following which the cooled coolant is recirculated back to the engine of the vehicle 100.

The radiator 300 is disposed in front of a power unit of the vehicle 100. The power unit of the vehicle 100 may be an internal combustion engine, or a combination of an internal combustion engine with a battery pack and a motor unit or other forms of usable work generation devices in combination with an internal combustion engine.

The radiator 300 is disposed in a horizontal orientation along a vehicle-width direction. The radiator 300 is mounted symmetrically to a vehicle longitudinal axis that passes in a vehicle front-to-rear direction such that the radiator 300 is horizontally symmetric with respect to the head pipe 402 of the vehicle. The radiator 300 is inclined forwards towards a vehicle-front direction and is mounted in front of a power unit of the vehicle 100 and rearward of the head pipe 402.

In an embodiment, the reservoir tank 200 may be disposed above the radiator 300 and the power unit of the vehicle 100. The inlet vent 202 of the reservoir tank 200 is connected to a radiator 300 by means of a connecting hose 302. During engine operation, the coolant heats up, expands, and may exceed the radiator's capacity, whereby the reservoir tank 200 provides a space to collect the excess coolant through the connecting hose 302. As the engine cools, the coolant contracts, creating a vacuum that draws the coolant back from the reservoir tank 200 into the radiator 300 through the connecting hose 302.

The connecting hose 302 extends in a rearward and upward direction from the radiator 300 in order to connect with the inlet vent 202 of the reservoir tank 200.

**Figure 4** illustrates an exploded view of an exemplary embodiment of a frame structure of a two-wheeled vehicle incorporating the present subject matter, in accordance with one embodiment of the invention.

With reference to Figure 4, 400 denotes a frame structure, 402 denotes a head pipe, 404 denotes a right frame member, 406 denotes a left frame member, 408 denotes a receiving member, 410 denotes a front end of the frame structure, 200 denotes a reservoir tank, and 208 denotes a second mounting bracket of the one or more mounting brackets,

The frame structure 400 comprises: the head pipe 402 being disposed at a front end of the frame structure 400, the left frame member 406, and the right frame member 404. Each of the left frame member 406 and the right frame member 404 extend in a rearward direction from the head pipe 402.

The head pipe 402 is the part of the frame structure 400 that houses the steering head and allows for steering motion of the vehicle 100. The left frame member 406 and the right frame member 404 extend in a rearward direction from the head pipe 402.

The left frame member 406 is disposed to the left side of a longitudinal axis of the vehicle 100 in a vehicle rear-to-front direction, and is a left half of the frame structure of the vehicle 100. The right frame member 406 is disposed to the right side of the longitudinal axis of the vehicle 100 in a vehicle rear-to-front direction, and is a right half of the frame structure of the vehicle 100. The left frame member 406 and the right frame member 406 symmetrically converge at the head pipe 402, forming a triangular lattice structure. In an embodiment, the left frame member 406 and the right frame member 406 may be connected to each other by supporting members or cross members. The reservoir tank 200 is mounted on at least one of the frame members 404, 406.

In an embodiment, the frame structure 400 may comprise a receiving member 408 that may be disposed on either one of the left frame member 406 or the right frame member 404. The receiving member 408 is configured to engage with the second mounting bracket 208 of the reservoir tank 200. In an exemplary embodiment of the present disclosure as shown in figure 4, the reservoir tank 200 is mounted on the right frame member 404 of the frame 400. Further, the reservoir tank 200 is coupled to the right frame member 404 using the receiving member 408.

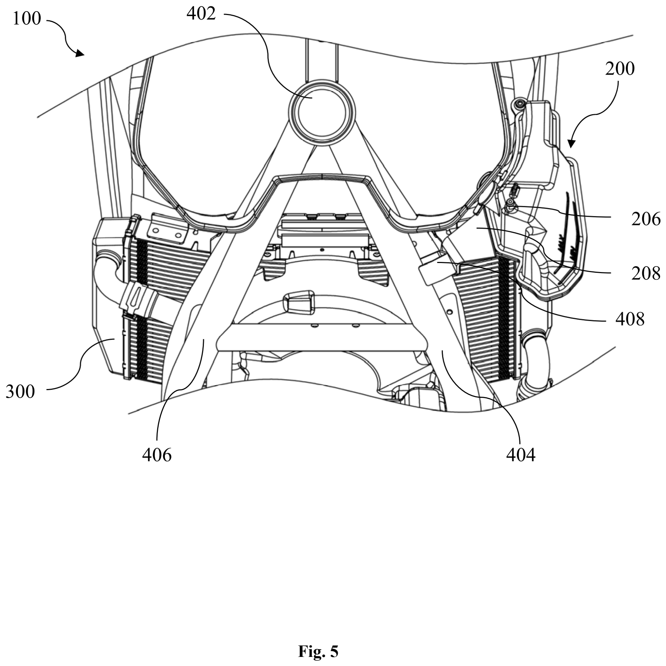

**Figure 5** illustrates a plan view of an exemplary embodiment of a two-wheeled vehicle 100 incorporating the present subject matter, in accordance with one embodiment of the invention.

With reference to Figure 5, 300 denotes a radiator, 100 denotes a vehicle, 200 denotes a reservoir tank, 208 denotes a second mounting bracket of the one or more mounting brackets, 402 denotes a head pipe, 404 denotes a right frame member, 406 denotes a left frame member, and 408 denotes a receiving member.

The radiator 300 is disposed in a horizontal orientation along a vehicle-width direction. The radiator 300 is mounted symmetrically to a vehicle longitudinal axis that passes in a vehicle front-to-rear direction such that the radiator 300 is horizontally symmetric with respect to the head pipe 402.

The reservoir tank 200 is disposed above the radiator 300 of the vehicle 100 and is connected to the radiator 300 by means of the connecting hose 302.

The frame structure 400 comprises a receiving member 408 that may be disposed on either one of the left frame member 406 or the right frame member 404. The receiving member 408 is configured to engage with the second mounting bracket 208 of the reservoir tank 200 such that the reservoir tank 200 is disposed rearward of the head pipe 402.

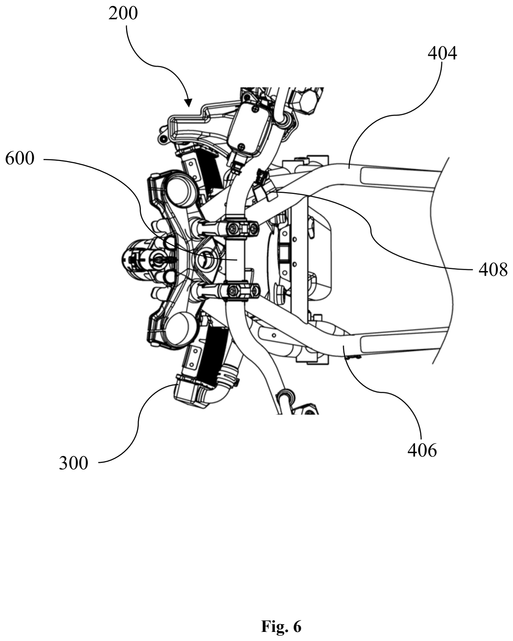

**Figure 6** illustrates a plan view of an exemplary embodiment of a handlebar assembly of a two-wheeled vehicle incorporating the present subject matter, in accordance with one embodiment of the invention.

With reference to Figure 6, 600 denotes a handlebar assembly of the vehicle, 200 denotes a reservoir tank, 404 denotes a right frame member, 406 denotes a left frame member, 408 denotes a receiving member, and 300 denotes a radiator.

The vehicle 100 comprises a handlebar assembly 600. The handlebar assembly 600 may comprise at least one of: a handlebar structure, one or more gripping sections, a steering stem, a handlebar riser, one or more brake/clutch levers, handle bar clamps, a wiring harness, an instrument cluster, a throttle mechanism, side mirrors, mirror stems, and one or more control switches. The steering stem of the handlebar assembly 600 is coupled with the head pipe 402 of the vehicle 100. The handlebar assembly 600 functions to allow the vehicle user to steer the vehicle 100 by rotating the handlebar as desired.

In an embodiment, the reservoir tank 200 is disposed below the handlebar assembly 600.

**Figure 7** illustrates an isometric view of an exemplary embodiment of a headlamp housing and side covers of a two-wheeled vehicle incorporating the present subject matter, in accordance with one embodiment of the invention.

With reference to Figure 7, 700 denotes a headlamp housing, fuel storage unit 710, 702 and 704 denote side covers, 706 denotes a second opening of one or more openings, 708 denotes a first opening of one or more openings, and 402 denotes a head pipe.

The headlamp housing 700 is a mounting assembly for headlamps of the vehicle 100. The headlamp housing 700 is disposed at a front end 410 of the frame structure 400. The headlamp housing 700 is mounted symmetrically to a vehicle longitudinal axis that passes in a vehicle front-to-rear direction such that the radiator 300 is horizontally symmetric with respect to the head pipe 402.

The side covers 702,704 are disposed rearward of headlamp housing 700, extending rearwardly on either side of the frame structure 400 from the front end 410 of the frame structure 400. The side covers 702, 704 are configured to enclose the frame members 404, 406. In an embodiment, the side covers 702, 704 cover a front portion of each of the left frame member 406 and the right frame member 404 of the frame structure 400.

The side covers 702, 704 may be made of any of: ABS plastic, polycarbonate, fiberglass reinforced plastic (FRP), carbon fiber, aluminium, steel, or the like.

The reservoir tank 200 is mounted between the frame structure 400 and the at least one side covers 702, 704 of the vehicles 100. Therefore, the reservoir tank 200 is covered on one side by one side of the frame structure 400 and on an opposite side by the at least one side covers 702, 704. In an exemplary embodiment, the reservoir tank 200 is mounted between the frame structure 400 and the side cover 702. In an alternate embodiment, the reservoir tank 200 is mounted between the frame structure 400 and the side cover 704.

The reservoir tank 200 comprises one or more mounting brackets 206, 208 that are configured to mount the reservoir tank 200 on at least one of the frame members 404, 406 and the side covers 702, 704. The first mounting brackets 206 of the one or more mounting brackets 206, 208 of the reservoir tank 200 is configured to engage with a corresponding receiving member (not shown) on a rear portion of the side covers 702, 704.

In an embodiment, the side covers 702, 704 may comprise one or more openings 706, 708. The one or more openings 706, 708 are configured for mounting at least one turn signal lamp and the reservoir tank 200.

In an embodiment, the one or more openings 706, 708 may be a window or a cut-out portion. The one or more openings 706, 708 may comprise any geometric shape including all polygons including but not limited to circles, ovals, ellipses, triangles, squares, rectangles, trapeziums, pentagons, hexagons, heptagons, octagons, parallelograms, rhombuses, or the like.

The one or more openings 706, 708 comprise a first opening 708, and a second opening 706. The first opening 708 is positioned rearward of the second opening 706. The first opening 708 is for the reservoir tank and the second opening 706 is for the at least one turn signal lamp. In an embodiment, the first opening 708 is aligned, in a side view of the vehicle 100, with the one or more markings 210, 212. This allows the vehicle user to see the one or more markings 210, 212 and reliably determine the coolant level of the reservoir tank 100. The second opening 706 is configured to allow the mounting of at least one turn signal lamp of the vehicle.

The one or more openings 706, 708 may have a dimension allowing complete visibility of the one or more markings 210, 212 on the reservoir tank 200, such that the one or more markings 210, 212 are easily visible to the vehicle user in a side view of the vehicle 100. In an embodiment, the one or more openings 706, 708 may be configured such that the reservoir tank 200 may be visible to a rider within their peripheral vision while riding the vehicle 100.

The vehicle 100 further comprises a fuel storage unit 710. In an embodiment, the reservoir tank 200 may be positioned adjacent to the fuel storage unit 710 and below the handlebar assembly 600. In another embodiment, at least one control unit may be located below the reservoir tank 200. Therefore, the reservoir tank 200 may be disposed above at least one control unit. The at least one control unit may include control units, motor control units, vehicle control units, batteries, starter relays, integrated starter generators, brake control modules, engine control units, or the like.

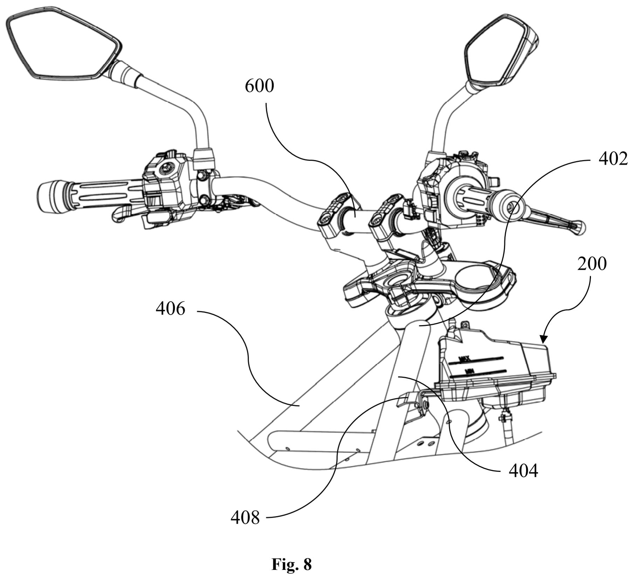

**Figure 8** illustrates an isometric view of an exemplary embodiment of a frame structure of a two-wheeled vehicle incorporating the present subject matter, in accordance with one embodiment of the invention.

With reference to Figure 8, 200 denotes a reservoir tank, 402 denotes a head pipe, 404 denotes a right frame member, 406 denotes a left frame member, 408 denotes a receiving member, and 600 denotes a handlebar assembly.

The frame structure 400 may comprise a receiving member 408 that may be disposed on either one of the left frame member 406 or the right frame member 404. The receiving member 408 is configured to engage with the one or more mounting brackets 208 of the reservoir tank 200.

The reservoir tank 200 is disposed below the handlebar assembly 600 and above the radiator 300 of the vehicle 100. At least one front suspension is disposed below the head pipe 402 of the vehicle 100, connecting the head pipe 402 with the front wheel of the vehicle 100. In an embodiment, the reservoir tank 200 may be disposed rearward of at least one front suspension of the vehicle 100.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

In light of the above-mentioned advantages and the technical advancements provided by the present disclosure, the claimed subject matter is not routine, conventional, or well understood in the art, as the claimed vehicle enable the following solutions to the existing problems in conventional technologies. In view of the above, the claimed invention may not be considered abstract and may not be obvious to a person skilled in the art. Further, the claimed subject matter and constructional features provide a technical solution to a technical problem.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications. Those skilled in the art will appreciate that any of the aforementioned system modules may be suitably replaced, reordered, or removed, and additional steps and/or system modules may be inserted, depending on the needs of a particular application.

While the present disclosure has been described with reference to certain embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

## Claims

1. A vehicle (100), the vehicle (100) comprising:
a frame structure (400),
a headlamp housing (700), the headlamp housing (700) being disposed at a front end (410) of the frame structure (400),
side covers (702, 704), the side covers (702, 704) extending rearward on either side of the frame structure (400) from the front end (410) of the frame structure (400); and
a reservoir tank (200), the reservoir tank (200) being coupled to the frame structure (400), wherein the reservoir tank (200) being disposed behind the headlamp housing (700), and between the frame structure (400) and the side covers (702, 704) of the vehicle (100).

2. The vehicle (100) as claimed in claim 1, wherein the frame structure (400) comprising:
a head pipe (402), the head pipe (402) disposed at the front end (410) of the frame structure (400);
a left frame member (406); and
a right frame member (404);
wherein each of the left frame member (406) and the right frame member (404) extending rearward from the head pipe (402), the side covers (702, 704) being configured to enclose the frame members (404, 406); and the reservoir tank (200) being mounted on at least one of the frame members (404, 406).

3. The vehicle (100) as claimed in claim 1, wherein the side covers (702, 704) comprising one or more openings (706, 708), the one or more openings (706, 708) are configured for mounting at least one turn signal lamp and the reservoir tank (200), wherein a first opening (708) of the one or more openings (706, 708) for the reservoir tank (200) is positioned rearward of a second opening (706) of the one or more openings (706, 708) for the at least one turn signal lamp.

4. The vehicle (100) as claimed in claim 1, wherein the vehicle (100) further comprises: a fuel storage unit (710) and a handlebar assembly (600) wherein the reservoir tank (200) is positioned adjacent to the fuel storage unit (710) and below the handlebar assembly (600).

5. The vehicle (100) as claimed in claim 4, wherein the reservoir tank (200) is disposed above a radiator (300) and a power unit of the vehicle (100).

6. The vehicle (100) as claimed in claim 4, wherein the reservoir tank (200) is disposed above at least one control unit and rearward of at least one front suspension of the vehicle (100).

7. The vehicle (100) as claimed in claim 2, wherein the reservoir tank (200) comprising:
an inlet vent (202);
an outlet vent (204);
one or more markings (210, 212), the one or more markings (210, 212) to indicate a fluid level of the reservoir tank; and
one or more mounting brackets (206, 208), the one or more mounting brackets (206, 208) being configured to mount the reservoir tank (200) on at least one of the frame members (404, 406) and the side covers (702, 704).

8. The vehicle (100) as claimed in claim 8, wherein the one or more mounting brackets (206, 208) are configured to allow vertical and horizontal adjustment of the reservoir tank (200) relative to the frame structure (400).

9. The vehicle (100) as claimed in claim 8, wherein the one or more markings (210, 212) include electronic level sensors configured to transmit fluid level data to a display unit of the vehicle (100).

10. The vehicle (100) as claimed in claim 8, wherein the reservoir tank (200) comprising one or more different fluid.
